(19) **Europäisches Patentamt / European Patent Office / Office européen des brevets**

(11) **EP 4 603 529 A1**

(12) 
# EUROPEAN PATENT APPLICATION
published in accordance with Art. 153(4) EPC

(43) Date of publication:
**20.08.2025 Bulletin 2025/34**

(21) Application number: **23891903.9**

(22) Date of filing: **07.11.2023**

(51) International Patent Classification (IPC):
$C08J\ 3/24^{(2006.01)}$    $C08J\ 3/12^{(2006.01)}$
$C08J\ 3/075^{(2006.01)}$    $C08F\ 220/04^{(2006.01)}$
$C08K\ 5/00^{(2006.01)}$    $C08K\ 5/053^{(2006.01)}$
$C08K\ 5/1515^{(2006.01)}$    $A61L\ 15/60^{(2006.01)}$

(52) Cooperative Patent Classification (CPC):
**A61L 15/60; C08F 220/04; C08J 3/075; C08J 3/12; C08J 3/24; C08K 5/00; C08K 5/053; C08K 5/1515**

(86) International application number:
**PCT/KR2023/017795**

(87) International publication number:
**WO 2024/106836 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2022 KR 20220154686**
          **06.11.2023 KR 20230152074**

(71) Applicant: **LG CHEM, LTD.**
**Seoul 07336 (KR)**

(72) Inventors:
- YU, Hyeonji
  **Daejeon 34122 (KR)**
- NAM, Hyemi
  **Daejeon 34122 (KR)**
- LEE, Hyemin
  **Daejeon 34122 (KR)**
- HAN, Chang Hun
  **Daejeon 34122 (KR)**

(74) Representative: **Plasseraud IP**
**104 Rue de Richelieu**
**CS92104**
**75080 Paris Cedex 02 (FR)**

(54) **METHOD FOR PREPARING SUPER ABSORBENT POLYMER**

(57) The present disclosure relates to a method for preparing super absorbent polym er, more specifically, to a method for preparing super absorbent polymer that can more productively prepare super absorbent polymer having excellent absorption performance, particularly, optimum gel bed permeability (GBP), by controlling surface tension of a surf ace crosslinking solution to a specific range in the surface crosslinking step.

EP 4 603 529 A1

**Description**

[Technical Field]

Cross-Reference to Related Application(s)

This application claims the benefit of Korean Patent Application No. 10-2022-015 4686 filed on November 17, 2022 and Korean Patent Application No. 10-2023-0152074 f iled on November 6, 2023 with the Korean Intellectual Property Office, the disclosures of which are herein incorporated by reference in their entirety.

The present disclosure relates to a method for preparing super absorbent polym er, more specifically, to a method for preparing super absorbent polymer that can more productively prepare super absorbent polymer having excellent absorption performance, particularly optimum gel bed permeability (GBP), by controlling surface tension of a surf ace crosslinking solution to a specific range in the surface crosslinking step.

[Background Art]

Super absorbent polymer (SAP) is synthetic polymer material that can absorb m oisture of 500 to 1000 times of self-weight, and is also named differently as super absor bency material (SAM), absorbent gel material (AGM), etc. according to developing comp anies. The superabsorbent polymer began to be commercialized as sanitary items, an d currently, it is being widely used as water-holding material for soil, water stop material for civil engineering and architecture, sheets for raising seedling, freshness preservative s in the field of food circulation, fomentation material, and the like, as well as hygienic go ods such as paper diapers for children, and the like.

In most cases, such super absorbent polymer is being widely used in the field of hygienic goods such as diapers or sanitary pad, and the like, and for this purpose, it sho uld exhibit high absorption force for moisture, exhibit excellent absorbency under pressu re so that absorbed moisture may not escape even under external pressure, and properl y maintain the shape even in a swollen state, thus exhibiting excellent permeability.

In addition, the super absorbent polymer, when included in hygienic products su ch as a diaper, should diffuse urine, and the like as broadly as possible, even under pre ssure by the body weight of a user. Thereby, super absorbent polymer particles includ ed in the total area of the absorption layer of a hygienic product may be totally utilized to further improve absorption performance and absorption speed of the hygienic product. Further, due to such diffusion property under pressure, urine, and the like once absorbe d in super absorbent polymer may be prevented from being exuded again, thus further i mproving rewet property of a diaper, and simultaneously, improving leakage inhibition pr operty of a diaper.

Previously, there was an attempt to improve broad diffusion property of urine, an d the like, by altering the design of a hygienic product such as a diaper. For example, t here was an attempt to improve diffusion property of urine, and the like, by introducing A DL (Acquisition Distribution Layer) in a hygienic product, or applying an absorption chan nel. However, improvement in diffusion property by the alteration of the design of a hy gienic product itself was not sufficient.

Meanwhile, various post-treatment processes such as surface crosslinking, foa ming, and the like are conducted, or various additives are used to improve absorbency or properties such as liquid permeability, absorption speed, and the like of super absorb ent polymer, but in this process, crosslinking density of polymer was lowered, and thus, sufficient gel strength could not be realized.

Thus, there is a demand for studies on the preparation of super absorbent polym er that can realize optimum liquid permeability and gel strength, while maintaining the e xisting absorption properties excellent.

[Disclosure of Invention]

[Technical Problem]

Thus, the present disclosure relates to a method for preparing super absorbent polymer, and more specifically, it is an object of the invention to provide a method for pr eparing super absorbent polymer that can more productively prepare super absorbent p olymer having excellent absorption performance, by controlling surface tension of a surf ace crosslinking solution comprising specific components in the surface crosslinking ste p.

[Technical Solution]

To achieve the object, there is provided a method for preparing super absorbent polymer comprising steps of:

forming hydrogel polymer comprising crosslinked polymer obtained by crosslinki ng polymerization of acrylic acid-based monomers having at least partially neutralized a cid groups in the presence of an internal crosslinking agent; drying, grinding, and classifying the hydrogel polymer to form base resin powde r; and

crosslinking the surface of the base resin powder in the presence of a surface cr osslinking solution comprising an epoxy-based surface crosslinking agent, a monohydri c alcohol-based solvent and a hydrophobic dispersant, and having surface tension of 36 mN/m to 50 mN/m.

**[Effects]**

According to the preparation method of super absorbent polymer of the inventio n, by controlling surface tension of a surface crosslinking solution comprising specific co mponents in the surface crosslinking step, super absorbent polymer having excellent liq uid permeability and optimum gel bed permeability (GBP) can be more productively pre pared.

[Best Mode for Carrying Out the Invention]

The terms used herein are only to explain specific embodiments, and are not intended to limit the invention.

A singular expression includes a plural expression thereof, unless the context clearly indicates otherwise. Throughout the specification, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

The terms 'first', 'second', 'third' and the like are used to explain various constru ctional elements, and they are used only to distinguish one constructional element from the other constructional elements.

Although various modifications can be made to the invention and the invention may have various forms, specific examples will be illustrated and explained in detail below. However, it should be understood that they are not intended to limit the invention to specific disclosure, and that the invention includes all the modifications, equivalents or replacements thereof without departing from the spirit and technical scope of the invention.

As used herein, the term "polymer" means a polymerized state of water soluble ethylenically unsaturated monomers, and may include polymers of all moisture content r anges or all particle diameter ranges. Among the polymers, polymer that is not dried a nd has a moisture content of about 40 wt% or more, may be referred to as hydrogel poly mer, and ground and dried particles of such hydrogel polymer may be referred to as cro sslinked polymer.

As used herein, the term "crosslinked polymer" means polymer obtained by cros slinking polymerization of water soluble ethylenically unsaturated monomers having at l east partially neutralized acid groups, and the "base resin powder" means material com prising such crosslinked polymer.

Further, the term "super absorbent polymer" is used to include crosslinked poly mer polymerized from water soluble ethylenically unsaturated monomers having at least partially neutralized acid groups, or base resin powder consisting of ground particles of t he crosslinked polymer, or the crosslinked polymer or base resin made suitable for prod uctization through additional processes, for example, surface crosslinking, fine particle r eassembly, drying, grinding, classification, and the like.

**(Preparation method of super absorbent polymer)**

The method for preparing super absorbent polymer according to one embodime nt of the invention comprises steps of:

forming hydrogel polymer comprising crosslinked polymer obtained by crosslinki ng polymerization of acrylic acid-based monomers having at least partially neutralized a cid groups in the presence of an internal crosslinking agent; drying, grinding, and classifying the hydrogel polymer to form base resin powde r; and

crosslinking the surface of the base resin powder in the presence of a surface cr osslinking solution comprising an epoxy-based surface crosslinking agent, a monohydri c alcohol-based solvent and a hydrophobic dispersant, and having surface tension of 36 mN/m to 50 mN/m.

To improve basic absorbency of super absorbent polymer, various post-treatme nt processes such as surface crosslinking, foaming, and the like were conducted, or vari ous additives were used, but in this process, crosslinking density of resin was lowered, and thus, sufficient gel strength could not be realized, and it was difficult to realize excell ent liquid permeability of an aimed degree.

Thus, the inventors of the present disclosure found out that in case surface tensi on of a surface crosslinking solution comprising specific components is controlled in the surface crosslinking step, super absorbent polymer having excellent liquid permeability and further improved absorption speed can be more productively prepared without the a bove-explained problems, and completed the invention.

Particularly, in the surface crosslinking step, by using an epoxy-based surface cr osslinking agent, a monohydric alcohol-based solvent and a hydrophobic dispersant in c ombination as a surface crosslinking solution, surface tension of the solution can be con trolled to the above-explained range, thus further slowing down a diffusion speed of the surface crosslinking solution into base resin, and the surface crosslinking solution can b e uniformly applied on the surfaces of base resin particles. Thus, absorption properties of the finally prepared super absorbent polymer particles can be improved, and particula rly, gel bed permeability (GBP) can be further improved.

Hereinafter, a method for preparing super absorbent polymer according to specif ic embodiment of the invention will be explained in detail according to steps.

(Polymerization step)

First, the preparation method of super absorbent polymer according to one emb odiment of the invention comprises a step of forming hydrogel polymer comprising cross linked polymer obtained by crosslinking polymerization of acrylic acid-based monomers having at least partially neutralized acid groups in the presence of an internal crosslinkin g agent.

In the polymerization step, a monomer composition comprising acrylic acid-base d monomers having at least partially neutralized acid groups is subjected to photo poly merization and/or thermal polymerization in the presence of an internal crosslinking age nt to form hydrogel polymer.

In the polymerization step, crosslinking polymerization of a monomer compositio n comprising components generally used in the preparation of super absorbent polymer as well as the above-explained components may be conducted.

First, a monomer composition comprising acrylic acid-based monomers having a t least partially neutralized acid groups and an internal crosslinking agent is prepared.

In the monomer composition, a polymerization initiator for polymerization may be further included.

The acrylic acid-based monomer may be any monomer commonly used in the pr eparation of super absorbent polymer. As non-limiting examples, the acrylic acid-base d monomer may be a compound represented by the following Chemical Formula 1:

[Chemical Formula 1]     $R_1$-COOM$^1$

In the Chemical Formula 1,

R is a C2-5 alkyl group comprising an unsaturated bond,

$M^1$ is a hydrogen atom, a monovalent or divalent metal, an ammonium group or an organic amine salt.

Preferably, the acrylic acid-based monomers include one or more selected fro m the group consisting of acrylic acid methacrylic acid, and monovalent metal salts, diva lent metal salts, ammonium salts and organic amine salts thereof. As such, in case acr ylic acid-based monomers are used, super absorbent polymer having improved absorpti on property can be obtained. In addition, as the monomers, one or more selected from the group consisting of anionic monomers such as maleic anhydride, fumaric acid, croto nic acid, itaconic acid, 2-acryloylethane sulfonic acid, 2-methcryloylethane sulfonic acid, 2-(meth)acryloylpropane sulfonic acid, or 2-(meth)acrylamide-2-methyl propane sulfonic acid, and salt thereof; non-ionic hydrophilic monomers such as (meth)acrylamide, N-sub stituted (meth)acrylate, 2-hydroxyethyl(meth) acrylate, 2-hydroxypropyl(meth)acrylate, m ethoxypolyethylene glycol (meth)acrylate, or polyethylene glycol (meth) acrylate; and am ino group-containing unsaturated monomers such as (N,N)-dimethylaminoethyl (meth)a crylate or (N,N)-dimethylaminopropyl (meth)acrylate, and quaternized products thereof; may be used.

Wherein, the acrylic acid-based monomers have acid groups, and at least a part of the acid groups are neutralized using a neutralizing solution. As the neutralizing age nt included in the neutralizing solution, basic materials such as sodium hydroxide, potas sium hydroxide, ammonium hydroxide, and the like may be used.

Wherein, the degree of neutralization of the monomers may be 40 to 95 mol%, or 40 to 80 mol%, or 45 to 75 mol%. Although the range of the neutralization degree m ay vary according to the final properties, if the neutralization degree is too high, neutraliz ed monomers may be precipitated, and thus, it may be difficult to smoothly progress pol ymerization, and to the contrary, if the neutralization degree is too low, absorption force of polymer may be significantly lowered, and it may exhibit elastic rubber-like properties, which is difficult to handle.

As used herein, the term 'internal crosslinking agent' is used to distinguish from a surface crosslinking agent for crosslinking the surface of base resin, and it functions fo r crosslinking unsaturated bonds of the above-explained acrylic acid-based monomers, t o polymerize. **In** this step, crosslinking is progressed without distinction of a surface an d inside, but by a surface crosslinking process of base resin as described later, the surfa ce of the finally prepared super absorbent polymer particles consists of a structure cross linked by the surface crosslinking agent, and the inside of the super absorbent polymer p articles consists of a structure crosslinked by the internal crosslinking agent.

As the internal crosslinking agent, multifunctional components may be used, and for example, one or more selected from the group consisting of N,N'-methylenebisacryla mide, trimethylolpropane tri(meth)acrylate, ethyleneglycol di(meth)acrylate, polyethylene glycol(meth)acrylate, propyleneglycol di(meth)acrylate, polypropyleneglycol(meth)acryla te, butanediol di(meth)acrylate, butyleneglycol di(meth)acrylate, diethyleneglycol di(met h)acrylate, hexanedioldi(meth) acrylate, triethyleneglycol di(meth)acrylate, tripropylenegl ycol, tetraethyleneglycol di(meth)acrylate, dipentaerythritol pentaacrylate, glycerin tri(me th)acrylate, pentaerythritol tetraacrylate, triarylamine, ethyleneglycol diglycidyl ether, pro pylene glycol, glycerin, and ethylene carbonate may be used. Preferably, polyethylene glycol di(meth)acrylate, or propyleneglycol di(meth)acrylate may be used.

The internal crosslinking agent may be used in the content of 100 ppmw to 10,0 00 ppmw, based on the weight of the acrylic acid-based monomers. When the intern al crosslinking agent is included in the above content range, sufficient crosslinking ma y be achieved, thus realizing strength above an optimum level, and due to the introduc tion of optimal crosslink structure, sufficient water retention capacity may be realized. Preferably, it may be included in the content of 100 ppmw or more, 200 ppmw or mor e, 300 ppmw or more or 600 ppmw or more, and 10,000 ppmw or less, 9,000 ppmw or less, 7,000 ppmw or 5,000 ppmwor less, or 200 ppmw to 9,000 ppmw, 300 ppmw to 7,000 ppmw or 600 ppmw to 5,000 ppmw. If the content of the internal crosslinking a gent is too low, crosslinking may not sufficiently occur, and thus, it may be difficult to r ealize strength above an optimum level, and if the content of the internal crosslinking agent is too high, internal crosslinking density may increase, and thus, it may be diffic ult to realize desired water retention capacity.

As the polymerization initiator, a thermal polymerization initiator or a photo poly merization initiator may be used according to a polymerization method. However, even when photopolymerization is progressed, since a certain amount of heat is generated by UV irradiation, etc., and heat is generated to some degree according to the progression of an exothermic polymerization reaction, a thermal polymerization initiator may be addit ionally included.

Wherein, as the photopolymerization initiator, for example, one or more selected from the group consisting of benzoin ether, dialkyl acetophenone, hydroxyl alkylketone, phenyl glyoxylate, benzyl dimethyl ketal, acyl phosphine and $\alpha$-aminoketone may be used. Among them, as specific examples of the acyl phosphine, commercially available lucirin TPO, i.e., diphenyl(2,4,6-trimethylbenzoyl)phosphine oxide may be used. More various photoinitiators are described in Reinhold Schwalm, " UV Coatings: Basics, Recent Developments and New Application(Elsevier 2007) " p. 115, and are not limited to the above-explained examples.

As the thermal polymerization initiator, one or more selected from the group consisting of a persulfate initiator, an azo initiator, hydrogen peroxide, and ascorbic acid may be used. Specific examples of the persulfate initiator may include sodium persulfate ($Na_2S_2O_8$), potassium persulfate ($K_2S_2O_8$), ammonium persulfate (($NH_4$)$_2S_2O_8$), etc., and, specific examples of the azo initiator may include 2,2-azobis(2-amidinopropane)dihydrochloride, 2,2-azobis-(N,N-dimethylene) isobutyramidinedihydrochloride, 2-(carbamoylazo)isobutyronitril, 2,2-azobis[2-(2-imidazolin-2-yl)propane]dihydrochloride, 4,4-azobis-(4-cyanovalericacid), etc. More various thermal initiators are described in "Principle of Polymerization (Wiley, 1981)", Odian, page 203, but the thermal initiators are not limited thereto.

Such a polymerization initiator may be used in the content of 10 ppmw to 10,000 ppmw, based on the weight of the acrylic acid-based monomers. Preferably, it may be included in the content of 10 ppmw or more, 30 ppmw or more, 50 ppmw or more, and 1 0,000 ppmw or less, 5,000 ppmw or less or 3,000 ppmw or less, or 30 ppmw to 5,000 p pmw, 50 ppmw to 3,000 ppmw or 80 ppmw to 2,500 ppmw. If the concentration of the polymerization initiator is too low, a polymerization speed may be slowed, and remainin g monomers may be extracted in large amount in the final product. To the contrary, if t he concentration of the polymerization initiator is too high, a polymer chain making up a network may become short, and thus, extractable content may increase and absorption under pressure may be lowered, and the properties of the resin may be deteriorated. T he content of the polymerization initiator, in case a photopolymerization initiator and a th ermal polymerization initiator are used together, means a mixed content.

Besides, in the monomer composition, additives such as a blowing agent, a surf actant, a thickener, a plasticizer, a preservation stabilizer, an antioxidant, and the like m ay be further included as necessary.

The blowing agent functions for inducing foaming during polymerization to form pores in hydrogel polymer, thus increasing a surface area. As the blowing agent, carb onate salt may be used, and for example, sodium bicarbonate, sodium carbonate, potas sium bicarbonate, potassium carbonate, calcium bicarbonate, calcium carbonate, mag nesium bicarbonate, or magnesium carbonate may be used.

It is preferable that the blowing agent is used in the content of 1500 ppmw or les s, based on the weight of the water soluble ethylenically unsaturated monomers. If the amount of the blowing agent used is greater than 1500 ppmw, too many pores may be f ormed, and thus, gel strength of super absorbent polymer may be lowered and the dens ity may decrease, thus causing distribution and storage problems. Further, it is prefera ble that the blowing agent is used in the content of 500 ppmw or more, or 1000 ppmw or more, based on the weight of the water soluble ethylenically unsaturated monomers.

The surfactant induces uniform dispersion of the blowing agent and uniform foaming, thus preventing decrease in gel strength or density during foaming. As the surfactant, anionic surfactant may be preferably used. Specifically, as the surfactant, a compound comprising $SO_3^-$ anion, and represented by the following Chemical Formula 2 may be used.

[Chemical Formula 2]        R-SO$_3$Na

In the Chemical Formula 2,
R is C8 to 16 alkyl.

Further, it is preferable that the surfactant is used in the amount of 300 ppmw or less, based on the weight of the acrylic acid-based monomers. If the amount of the surfactant used is greater than 300 ppmw, the content of the surfactant may increase in the super absorbent polymer, which is not preferable. Further, it is preferable that the surfactant is used in the amount of 100 ppmw or more, or 150 ppmw or more, based on the weight of the water soluble ethylenically unsaturated monomer.

Further, such a monomer composition may be prepared in the form of a solution in which the above-explained raw materials including monomers, internal crosslinking agent, blowing agent, initiator, and the like are dissolved in a solvent.

Wherein, the solvent that can be used is not limited as long as it can dissolve the above explained components. For example, as the solvent, water, ethanol, ethylene glycol, diethyleneglycol, triethyleneglycol, 1,4-butanediol, propyleneglycol, ethyleneglycol monobutyl ether, propyleneglycol monomethyl ether, propyleneglycol monomethyl ether acetate, methylethylketone, acetone, methylamylketone, cyclohexanone, cyclopentanone, diethyleneglycol monomethyl ether, diethyleneglycol ethyl ether, toluene, xylene, butyrolactone, carbitol, methylcellosolve acetate, N,N-dimethylacetamide, or a mixture thereof may be used.

The step of forming hydrogel polymer through the polymerization of the monomer composition may be conducted by a common polymerization method, and the process is not specifically limited. As a non-limiting example, it may be progressed in a reactor equipped with a movable conveyor belt.

Specifically, in case the monomer composition is subjected to photopolymerization in a reactor equipped with a movable conveyor belt, a hydrogel polymer sheet may be obtained. Wherein, the thickness of the sheet may vary according to the concentration and injection speed of the monomer composition, and to induce uniform polymerization of the entire sheet and secure production speed, commonly, it is preferable that the thickness is controlled to 0.5 to 10 cm.

Hydrogel polymer obtained thereby commonly has a moisture content of 40 wt% to 80 wt%. Wherein, the "moisture content" is the content of moisture occupied based on the total weight of hydrogel polymer, and it means a value obtained by subtracting the weight of polymer of a dry state from the weight of hydrogel polymer. Specifically, it is defined as a value calculated by measuring the weight loss according to moisture evaporation in the polymer while raising the temperature of polymer through infrared heating to dry. Wherein, the temperature is raised from room temperature to about 180°C and then maintained at 180°C, and the total drying time may be set to 20 minutes including a temperature raising step of 5 minutes.

(Drying, grinding and classifying step)

Next, the preparation method of super absorbent polymer according to one embodiment of the invention comprises a step of drying, grinding and classifying prepared hydrogel polymer to form base resin powder.

Specifically, the above-obtained hydrogel polymer is dried. To increase the efficiency of the drying step, if necessary, a step of coarse grinding (chopping) of the hydrogel polymer may be conducted before drying.

Wherein, the grinder used is not limited, and specifically, it may include anyone selected from the group consisting of vertical pulverizer, turbo cutter, turbo grinder, rotary cutter mill, cutter mill, disc mill, shred crusher, crusher, chopper and disc cutter, but is not limited thereto.

Wherein, the coarse grinding step may be conducted such that the particle diameter of hydrogel polymer may become about 2 mm to about 10 mm. Grinding to particle diameter less than 2 mm would not be technically easy due to high moisture content of hydrogel polymer, and it may cause aggregation between ground particles. Meanwhile, if grinding to particle diameter greater than 10 mm, the effect for increasing the efficiency of the subsequent drying step may be insignificant.

For the hydrogel coarsely ground as described above, or hydrogel immediately after polymerization without coarse grinding, drying is conducted. Wherein, the drying temperature of the drying step may be about 150 to about 250 °C. If the drying temperature is less than 150°C, a drying time may be too lengthened, and the properties of the finally formed super absorbent polymer may be deteriorated, and if the drying temperature is greater than 250°C, only the surface of polymer may be dried, and thus, fine particles may be generated in the subsequent grinding process, and the properties of the finally formed super absorbent polymer may be deteriorated. Thus, preferably, the drying may be progressed at a temperature of about 150 to about 200°C, more preferably about 150 to about 190°C.

With regard to a drying time, the drying may be progressed for about 20 to about 90 minutes considering process efficiency, and the like, but the drying time is not limited thereto.

Meanwhile, the drying step may be conducted in a multi-stage process within the above-explained temperature

range.

The drying method of the drying step is not limited as long as it is commonly used as a drying process of hydrogel polymer. Specifically, the drying may be conducted by hot air supply, infrared irradiation, microwave irradiation or UV irradiation. The hot air supply may be conducted using an oven capable of transferring air volume up and down.

The dried polymer may have a moisture content of about 0.1 to about 10 wt%.

Next, the dried polymer obtained through the drying step is ground.

The polymer powder obtained after the grinding step may have particle diameter of 150 to 850 $\mu$m. As a grinder used to grind to such a particle diameter, specifically, a pin mill, a hammer mill, a screw mill, a roll mill, a disc mill, a jog mill, and the like may be used, but is not limited thereto.

Further, to manage the properties of super absorbent polymer powders finally productized after the grinding step, polymer powders obtained after grinding are classified according to particle diameter. Preferably, polymers having particle diameter of about 150 to about 850 $\mu$m are classified, and only the polymer powders having such particle diameters may be subjected to a surface crosslinking reaction step and productized. More specifically, the classified base resin powder may have particle diameter of 150 $\mu$m to 850 $\mu$m, and may comprise particles having particle diameters of 300 $\mu$m to 600 $\mu$m in the content of 50 wt% or more, and the content of fine powder having particle diameter less than 150 $\mu$m may be less than 3 wt%.

Meanwhile, in the polymerization, drying and grinding steps, fine powder having particle diameter less than 150 $\mu$m may be generated, and the fine powder having particle diameter less than 150 $\mu$m, classified in the above-explained classification step, may be subjected to a fine powder reassembling process and prepared into normal particles of 150 $\mu$m or more, and thus, reused as base resin powder.

For the fine powder reassembling process, a method commonly applied in the art may be applied, and for example, a process of aggregating fine powder in wet state may be conducted. Specifically, classified fine powder and water are mixed to aggregate, and then, water is dried through a redrying process to prepare normal particles. In the reassembling process, additives such as water-soluble polymer may be selectively used to improve aggregation strength of particles.

(Surface crosslinking step)

Meanwhile, after conducting the above-explained classification step to prepare base resin powder, a step of subjecting the base resin powder to surface crosslinking while heat treating, in the presence of a surface crosslinking agent, may be further conducted.

According to one embodiment of the invention, the surface crosslinking step is conducted using a surface crosslinking solution having surface tension controlled to a specific range, and specifically, by meeting that surface tension of the surface crosslinking solution is 36 mN/m to 50 mN/m, super absorbent polymer having excellent liquid permeability may be prepared.

More specifically, by using an epoxy-based surface crosslinking agent, a monohydric alcohol-based solvent and a hydrophobic dispersant in combination as the surface crosslinking solution, surface tension of the solution may be controlled to the above-explained range, which is relatively low surface tension (36 mN/m to 50 mN/m), compared to surface tension of commonly used surface crosslinking solution, and further slows down the diffusion speed of the surface crosslinking solution into the base resin. Thus, the surface crosslinking solution may be uniformly applied on the surfaces of base resin particles, and absorption properties of the finally prepared super absorbent polymer particles may be improved, and particularly, gel bed permeability (GBP) may be further improved.

If surface tension of the surface crosslinking solution is less than 36 mN/m, it may be difficult for the surface crosslinking solution comprising an epoxy-based surface crosslinking agent to penetrate into base resin powder, and thus, it may be difficult to conduct uniform surface crosslinking to a desired extent, and if surface tension is greater than 50 mN/m, the surface crosslinking solution may excessively penetrate into base resin powder, and thus, surface crosslinking density may increase and water retention capacity may be lowered. Preferably, surface tension of the surface crosslinking solution may be 36 mN/m or more, 37 mN/m or more, 38 mN/m or more, and 49 mN/m or less, 48.5 mN/m or less, and within the above range, super absorbent polymer having excellent absorption properties may be prepared without the above-explained problems. The surface tension of the surface crosslinking solution may be controlled according to the kinds and contents of specific components of the solution, i.e., epoxy-based crosslinking agent, monohydric alcohol-based solvent, and hydrophobic dispersant, but is not limited thereto.

Meanwhile, the surface tension may be measured at room temperature of 23±2 °C according to a Wilhelmy plate method. Specific measurement method of surface tension will be explained in detail in experimental examples later.

The surface crosslinking step induces a crosslinking reaction on the surface of the base resin powder in the presence of a surface crosslinking agent, wherein unsaturated bonds of non-crosslinked acrylic acid-based monomers remaining on the surface are crosslinked by the surface crosslinking agent, thus forming super absorbent polymer with increased surface crosslinking density.

Specifically, a surface crosslink layer may be formed by a heat treatment proces s in the presence of a surface crosslinking agent, and the heat treatment process increa ses surface crosslinking density, namely, external crosslinking density, but does not cha nge internal crosslinking density, and thus, prepared super absorbent polymer having a surface crosslink layer may have higher crosslinking density of the outside than the insi de.

The surface crosslinking solution used in the surface crosslinking step comprise s an epoxy-based surface crosslinking agent.

The epoxy-based crosslinking agent may easily crosslink with an ester group exi sting on the surface of base resin at relatively low temperature (about 100°C to 140°C), and thus, may further improve properties under pressure such as 0.9 AUL, GBP, and th e like. Further, it is used in combination with a monohydric alcohol-based solvent and hydrophobic dispersant in the surface crosslinking solution, to enable controlling of surfa ce tension within an aimed range.

The epoxy-based crosslinking agent may be a compound comprising at least on e epoxy group, preferably 2 or more epoxy groups in the molecule, and it may be a com pound comprising an ether structure in the molecule together with the epoxy group. As the epoxy-based crosslinking agent, for example, one or more selected from the group c onsisting of ethyleneglycol diglycidyl ether, diethyleneglycol diglycidyl ether, glycerol trig lycidyl ether, polyethyleneglycol diglycidyl ether and propylene glycol diglycidyl ether ma y be used, and preferably ethyleneglycol diglycidyl ether, or polyethyle-neglycol diglycidy l ether may be used.

Meanwhile, in case a compound such as epoxy alkyl phosphate is used as the c rosslinking agent, although it comprises an epoxy group, it may have an adverse influen ce on the absorption properties of an absorber according to the concentration of phosph ate, and compared to the epoxy-based crosslinking agent according to the present discl osure, surface tension of an aimed degree (36 mN/m to 50 mN/m) is not met under the same water retention capacity.

Preferably, the epoxy-based crosslinking agent is not an epoxy alkyl phosphate compound.

The epoxy-based crosslinking agent may be used in the amount of 0.01 to 10 pa rts by weight, based on 100 parts by weight of the base resin powder. Preferably, it m ay be used in the content of 0.05 parts by weight or more, 0.1 parts by weight or more a nd 8 parts by weight or less, 5parts by weight or less, 1parts by weight or less. By cont rolling the content range of the epoxy-based crosslinking agent to the above-explained r ange, super absorbent polymer exhibiting excellent absorption performance and liquid p ermeability may be prepared.

The surface crosslinking solution used in the surface crosslinking step comprise s a monohydric alcohol-based solvent as a solvent.

The monohydric alcohol-based solvent relatively lowers surface tension of the s urface crosslinking solution to slow down diffusion of the surface crosslinking solution, t hus enabling more uniform application of the surface crosslinking solution on the surfac e of base resin powder. Thus, it can effectively improve gel bed permeability (GBP) a mong the properties under pressure, and enables controlling of surface tension to a desi red range together with the epoxy-based crosslinking agent and hydrophobic dispersant in the surface crosslinking solution.

As the examples of the monohydric alcohol-based solvent, one or more selected from the group consisting of methanol, ethanol, n-propanol, isopropanol and butanol ma y be used, and preferably, ethanol, and isopropanol may be used.

The surface crosslinking solution may further comprise additional solvent, besid es the monohydric alcohol-based solvent, and for example, may further comprise water and/or hydrophilic organic solvents, and preferably, water may be used together with th e monohydric alcohol-based solvent.

The monohydric alcohol-based solvent may be included in the content of 1 to 5 parts by weight, based on the total content of the surface crosslinking solution. Prefera bly, it may be used in the content of 1.5 parts by weight or more, 2 parts by weight or m ore, and 4.5 parts by weight or less, 4 parts by weight or less, 3 parts by weight or less. By controlling the content range of the monohydric alcohol-based solvent within the abo ve-explained range, surface tension of the surface crosslinking solution may be controll ed to a desired range, thus preparing super absorbent polymer exhibiting excellent abso rption performance and liquid permeability, and the like.

The surface crosslinking solution used in the surface crosslinking step comprise s a hydrophobic dispersant.

The hydrophobic dispersant relatively lowers surface tension of the surface cros slinking solution to slow down diffusion of the surface crosslinking solution, thus enablin g more uniform application of the surface crosslinking solution on the surface of base re sin powder. Thus, it can effectively improve gel bed permeability (GBP) among the pro perties under pressure, and enables controlling of surface tension to a desired range to gether with the epoxy-based crosslinking agent and monohydric alcohol-based solvent i n the surface crosslinking solution.

As the examples of the hydrophobic dispersant, one or more selected from the group consisting of sodium dodecyl sulfate, poly(dimethyldiallylammoniuchloride), water-dispersed silica, calcium stearate, di($C_{12-20}$alkyl)dimethy-lammonium salt and polyethylene glycol may be used, and preferably, sodium dodecyl sulfate and water-dispersed silica may be used.

The hydrophobic dispersant may be used in the content of 0.0001 to 1 part by w eight, based on the total content of the surface crosslinking solution. Preferably, it may be used in the content of 0.0002 parts by weight or more, 0.003 parts by weight, and 0.5 parts by weight or less, 0.45 parts by weight or less. By controlling the content range o f the hydrophobic dispersant within the above-explained range, surface tension of the surface crosslinking solution may be controlled to a desired range, thus preparing super a bsorbent polymer exhibiting excellent absorption performance and liquid permeability, a nd the like. For reference, in case water-dispersed silica is used as the hydrophobic di spersant, the content is based on solid silica.

The surface crosslinking solution may further comprise additional additives, besi des the above-explained components. Specifically, the additional additives included in the surface crosslinking solution may increase mixing efficiency of the base resin particl es and surface crosslinking solution, to apply the surface crosslinking solution more unif ormly, thus improving GBP among the properties under pressure.

As specific examples of the additional additives, one or more selected from the g roup consisting of methylene glycol, ethylene glycol, propylene glycol and butylene glyc ol may be mentioned, and more preferably, propylene glycol may be used.

The additional additives may be included in the content of 0.1 to 5 parts by weig ht, based on the total content of the surface crosslinking solution, and preferably, it may be used in the content of 0.5 to 3 parts by weight, 1 to 3parts by weight, 1.5 to 2.5 parts by weight, and when included in the above content range, applicability of the surface cro sslinking solution may be increased to further improve GBP among the properties under pressure.

Meanwhile, the surface crosslinking agent is added to base resin powder in the state of a surface crosslinking composition comprising the same, and the method of add ing the surface crosslinking composition is not specifically limited. For example, the su rface crosslinking composition and base resin powder may be put in a reactor and mixe d, or the surface crosslinking composition may be sprayed to the base resin powder, or t he base resin powder and surface crosslinking composition may be continuously fed to a continuously operated mixer and mixed, etc.

The surface crosslinking step may be progressed by heat treating at a temperat ure of 110°C to 200°C, or 110°C to 150°C for 30 minutes or more. More specifically, th e above-explained temperature may be set as a maximum reaction temperature, and th e surface crosslinking reaction may be progressed by heat treating at the maximum rea ction temperature, for 30 to 80 minutes, or 40 to 70 minutes.

By meeting such surface crosslinking process conditions (particularly, temperatu re rise conditions and reaction at the maximum reaction temperature), super absorbent polymer appropriately meeting excellent properties such as permeability under pressure may be prepared.

A temperature rise means for the surface crosslinking reaction is not specifically limited. A heat transfer medium may be supplied, or a heat source may be directly sup plied for heating. Wherein, as the kind of heat transfer media that can be used, temper ature-increased fluids such as steam, hot air, hot oil, and the like may be used, but the i nvention is not limited thereto, and the temperature of heat transfer medium supplied m ay be appropriately selected considering the means of heat transfer medium, temperatu re rise means, and target temperature. Meanwhile, as the heat source directly supplie d, electric heating, and gas heating may be mentioned, but the invention is not limited th ereto.

Meanwhile, in the method for preparing super absorbent polymer according to o ne embodiment of the invention, various multivalent metal salts such as aluminum salts such as aluminum sulfate, and the like may be further used during surface crosslinking, to further improve permeability, and the like. Such multivalent metal salt may be includ ed on the surface crosslink layer of the finally prepared super absorbent polymer.

In some embodiments, the surface crosslinking solution is included in the cont ent of 1 to 10 parts by weight, based on 100 parts by weight of the base resin powder.

(Super absorbent polymer)

According to one embodiment of the invention, there is provided super absorben t polymer prepared by the preparation method of super absorbent polymer. Super abs orbent polymer prepared according to the preparation method of super absorbent polym er of the above-explained embodiment may realize excellent absorption performance an d liquid permeability, particularly, excellent gel bed permeability (GBP), with optimum cr osslinking density.

The super absorbent polymer may have gel bed permeability (GBP) of 50 darcy or more, more preferably, 53 darcy or more, 55 darcy or more, and 110 darcy or less, 1 05 darcy or less. Specific measurement method of the gel bed permeability is as descr ibed in Korean Patent Application No. 10-2014-7018005, and will be explained in more detail in experimental examples later.

Hereinafter, the actions and effects of the invention will be explained in more det ail through specific examples of the invention. However, these examples are presente d only as the illustrations of the invention, and the scope of the right of the invention is n ot determined thereby.

**[Example]**

**(Example 1)**

As a preparation apparatus of super absorbent polymer, a continuous manufact uring apparatus consisting of a polymerization process, a hydrogel grinding process, a d rying process, a grinding process, a classification process, a surface crosslinking proces s, a cooling process, a classification process, and a transfer process connecting each pr ocess, was used.

To 100 parts by weight of acrylic acid, 0.43 parts by weight of polyethylene glyco l diacrylate (weight average molecular weight: ~ 500 g/mol) as an internal crosslinking a gent, and 0.01 parts by weight of phenylbis(2,4,6-trimethylbenzoyl)phosphine oxide as a photo initiator were mixed to prepare a monomer solution. Subsequently, while conti nuously feeding the monomer solution with a metering pump, 175 parts by weight of 31. 5 wt% sodium hydroxide aqueous solution was simultaneously line mixed to prepare a monomer aqueous solution. Further, 1.5 parts by weight of 0.3 wt% sodium persulfate aqueous solution, 0.5 parts by weight of an aqueous solution containing 0.1 wt% sodiu m bicarbonate as a blowing agent, and 0.25 parts by weight of an aqueous solution cont aining 0.05 wt% calcium stearate as a surfactant were continuously line mixed to prepar e a monomer mixture.

Through such transfer, a monomer aqueous solution was injected in a polymerization reactor consisting of moving conveyor belt, and irradiated with UV (dose: $2mW/cm^2$) through UV irradiation apparatus, thus progressing UV polymerization for 2 minutes, to prepare hydrogel polymer.

The hydrogel was cut to an average size of about 300 mm or less, and then, inje cted in a grinder (equipped with a porous plate containing plural holes each having diam eter of 10mm) and ground.

Subsequently, the ground hydrogel was dried in a dryer capable of transferring a ir volume up and down. 180°C Hot air was flowed such that the moisture content of dri ed crumbs became about 2% or less, thereby uniformly drying the hydrogel.

The dried resin was ground with a grinder, and then, classified to obtain base re sin of 150 to 850 $\mu$m.

Thereafter, to 100 parts by weight of the prepared base resin powder, 10.28g of a surface crosslinking solution (comprising 6g of water, 2g of isopropanol, 0.15g of ethyl eneglycol diglycidyl ether as a surface crosslinking agent, 0.07g of water dispersed silic a(STO) as a hydrophobic dispersant, 2g of propylene glycol as other additives, and 0.06 g of silicon dioxide (Aerosil 200)) was sprayed, and they were stirred and mixed at room temperature such that the surface crosslinking solution was uniformly distributed on the base resin powder.

Subsequently, the base resin powder mixed with the surface crosslinking solutio n was put in a surface crosslinking reactor and a surface crosslinking reaction was progr essed.

In the surface crosslinking reactor, the base resin powder was additionally react ed at 140°C for 40 minutes. After the surface crosslinking, to 40 parts by weight of the base resin, added 0.08 parts by weight of silicon dioxide (Aerosil 200), and then, the fin ally prepared super absorbent polymer sample was taken. After the surface crosslinkin g process, it was classified with a standard sieve of ASTM standard to prepare super ab sorbent polymer of Example 1 having particle diameter of 150$\mu$m to 850 $\mu$m.

**(Examples 2 to 9 and Comparative Examples 1 to 4)**

Super absorbent polymer was prepared by the same method as Example 1, exc ept that the components and contents as described in the following Table 1 were used i n the surface crosslinking step.

[Table 1]

| | | Composition of surface crosslinking solution | | | Properties of surfac e crosslinking soluti on | |
| | | Monohydric alco hol-based solven t (component/cont ent(g)) | Surface crosslink ing agent (component/cont ent(g)) | Hydrophobic disper sant (component/conten t(g)) | Surface t ension (mN/m) | Absorpti on speed (min) |
|---|---|---|---|---|---|---|
| Example 1 | | Isopropanol/2 | EGDGE/0.15 | STO/0.07 | 42.4 | 60 |
| Example 2 | | ethanol/2 | EGDGE/0.15 | STO/0.07 | 42.8 | 60 |
| Example 3 | | methanol/2 | EGDGE/0.15 | STO/0.07 | 46.7 | 60 |

(continued)

| | | Composition of surface crosslinking solution | | | Properties of surface crosslinking solution | |
|---|---|---|---|---|---|---|
| | | Monohydric alcohol-based solvent (component/content(g)) | Surface crosslinking agent (component/content(g)) | Hydrophobic dispersant (component/content(g)) | Surface tension (mN/m) | Absorption speed (min) |
| Example 4 | | methanol/3 | EGDGE/0.15 | STO/0.07 | 42.1 | 60 |
| Example 5 | | isopropanol/2 | EGDGE/0.15 | PDMEMAC/0.15 | 45.3 | 60 |
| Example 6 | | Isopropanol/2 | EGDGE/0.15 | SDS/0.00043 | 40.3 | 60 |
| Example 7 | | isopropanol/2 | EGDGE/0.15 | STO/0.25 | 45.4 | 60 |
| Comparative Example 1 | | - | EGDGE/0.15 | STO/0.07 | 51.3 | 7.5 |
| Comparative Example 2 | | - | EGDGE/0.15 | - | 58.0 | 0.8 |
| Comparative Example 3 | | - | EGDGE/0.15 | - | 51.3 | 7.5 |
| Comparative Example 4 | | - | EGDGE/0.15 | - | 47.8 | 10.2 |
| *hydrophobic dispersant<br>STO: water dispersed silica (based on solid silica content)<br>PDMEMAC: Poly(dimethyl diallyl ammonium chloride) MW 80k<br>SDS: Sodium dodecyl sulfate<br>*surface crosslinking agent<br>EGDGE: Ethylene glycol diglydicyl ether<br>EC : Ethylene Carbonate<br>PC : Propylene Carbonate | | | | | | |

**[Experimental Example 1. Property evaluation of surface crosslinking solution]**

For the surface crosslinking solutions used in Examples and Comparative Examples, the properties were evaluated as follows, and the results were shown in Table 2.

Unless otherwise indicated, the following property evaluations were all progressed at room temperature (25 ±1°C).

(1) Surface tension (mN/m)

A 'plate method (the wilhelmy plate method)', which is a method of measuring static surface tension, was applied to measure surface tension of each surface crosslinking solution used in Examples and Comparative Examples. Specifically, it means the maximum tension value until a solution to be measured reaches the surface of a plate tip, and was measured using Process tensiometer (KRUSS Company), and the results were shown in Table 1.

(2) Evaluation of absorption property of surface crosslinking solution (absorption time, min)

For the base resin powder before surface crosslinking in the preparation steps in Examples and Comparative Examples, absorption degree of the surface crosslinking sol ution was measured.

Specifically, into a beaker containing 50g of the surface crosslinking solution, 2g of base resin powder was injected, and a time required for corresponding resin to be co mpletely saturated was measured, and the results were shown in Table 1.

For reference, the property may mean the application degree of the surface cros slinking solution on the surface of base resin, and as absorption is delayed, application on the base resin surface increases, which indirectly indicates excellent properties unde r pressure.

**[Experimental Example 2. Property evaluation of super absorbent polymer]**

For each super absorbent polymer prepared in Examples and Comparative Exa mples, the properties were measured as follows, and the results were shown in Table 2.

The following property evaluations except vortex evaluation were progressed at room temperature($23\pm1°C$) and relative humidify($45\pm1\%$), and the physiological saline o r brine means an aqueous solution of 0.9 wt% sodium chloride (NaCl).

(1) Centrifuge Retention Capacity (CRC, q/q)

Among the super absorbent polymer powders prepared in Examples and Comp arative Examples, samples having particle diameters of 150 to 850 $\mu$m were taken, and centrifuge retention capacity(CRC) according to absorption ratio under no load was mea sured according to European Disposables and Nonwovens Association, (EDANA) stand ard EDANA WSP 241.2.

Specifically, the sample WO(g) (about 0.2g) was uniformly put in an envelope ma de of non-woven fabric, and the envelope was sealed, and then, soaked in physiological saline (0.9 wt%) at room temperature. After 30 minutes, the envelope was drained usi ng a centrifuge under 250G for 3 minutes, and the mass of the envelope W2(g) was me asured. Further, the same operation was conducted without using corresponding sam ple, and then, the mass at that time W1(g) was measured. Using each mass obtained, CRC(g/g) was calculated according to the following Formula.

[Mathematical Formula 1]

$$CRC \ (g/g) = \{[W2(g) - W1(g)]/W0(g)\} - 1$$

(2) Absorbency Under Pressure (AUP, g/g)

For each super absorbent polymer prepared in Examples and Comparative Exa mples, 0.9 psi absorbency under pressure was measured according to EDANA method NWSP 242.0.R2. For measurement of absorbency under pressure, classified resin us ed for the CRC measurement was used.

Specifically, on the bottom of a plastic cylinder with an internal diameter of 25 m m, a 400-mesh wire netting made of stainless was installed. Under room temperature ($23\pm1°C$) and relative humidity($45\pm1\%$) conditions, WO(g) (0.16 g) of absorbent polymer was uniformly sprayed on the wire netting, and a piston having an external diameter slig htly smaller than 25 mm and capable of further delivering a load of 0.9 psi uniformly was placed thereon such that there was no gap between the piston and the internal wall of th e cylinder and up and down movement of the piston was not hindered. At this time, the weight of the apparatus W3(g) was measured.

Inside of a petri dish having a diameter of 150 mm, a glass filter with a diameter of 90 mm and a thickness of 5 mm was placed, and physiological saline consisting of 0. 9 wt% sodium chloride was filled to the same level with the upper surface of the glass fil ter. One piece of a filter paper with a diameter of 90 mm was put thereon. The above -described measurement apparatus was put on the filter paper, and liquid was absorbed under load for 1 hour. After 1 hour, the measurement apparatus was picked up, and th e weight W4(g) was measured.

Using each mass obtained, absorbency under pressure(g/g) was calculated acc ording to the following Mathematica Formula 2.

[Mathematica Formula 2]

$$AUP(g/g) = [W4(g) - W3(g)]/W0(g)$$

(3) Gel Bed Permeability (GBP, darcy)

For each super absorbent polymer prepared in Examples and Comparative Exa mples, free swelling gel bed permeability to physiological saline was measured, and the results were shown in Table 2.

The gel bed permeability was measured by a method described in Korean Paten t Application No. 10-2014-7018005 (using the same apparatus), and calculated accordin g to the following Mathematical Formula 3.

[Mathematical Formula 3]

$$K = [Q \times H \times Mu]/[A \times Rho \times P]$$

In the Mathematical Formula 3,

K is permeability($cm^2$), and Q is the velocity of flow(g/speed),
H is the height of a sample(cm), and Mu is liquid viscosity(poise)(about 1 cps for the test solution used in the test),
A is the cross sectional area($cm^2$) for liquid flow,
Rho is liquid density($g/cm^3$)(of the test solution used in concerned test), P is hydrostatic pressure(dynes/$cm^2$) (commonly about 3,923dynes/$cm^2$).

The hydrostatic pressure is calculated by the following Mathematical Formula 3-1.

[Mathematical Formula 3-1]

$$P = Rho \times g \times h$$

In the Mathematical Formula 3-1,

Rho is liquid density($g/cm^3$),
g is gravitational acceleration, commonly 981 cm/$sec^2$,
h is liquid height (for example, in the case of permeability test described herein, 7.8 cm)

(4) Vortex time (sec)

For each super absorbent polymer prepared in Examples and Comparative Exa mples, 2±0.0001g of the super absorbent polymer (based on non-classified resin) was a dded to 50 mL of physiological saline (24.4±0.2°C), and stirred at 600 rpm, and a time t aken until vortex disappeared was measured.

[Table 2]

|  | CRC (g/g) | 0.9 AUL (g/g) | GBP (darcy) | Vortex (sec) |
|---|---|---|---|---|
| Example 1 | 31.4 | 19.0 | 78 | 38 |
| Example 2 | 31.4 | 19.2 | 78 | 39 |
| Example 3 | 31.4 | 18.7 | 69 | 37 |
| Example 4 | 31.3 | 18.9 | 76 | 35 |
| Example 5 | 31.2 | 18.7 | 68 | 35 |
| Example 6 | 31.2 | 18.7 | 69 | 35 |
| Example 7 | 31.1 | 18.7 | 69 | 36 |
| Comparative Ex ample 1 | 29.5 | 17.8 | 38 | 34 |

(continued)

|  | CRC (g/g) | 0.9 AUL (g/g) | GBP (darcy) | Vortex (sec) |
|---|---|---|---|---|
| Comparative Ex ample 2 | 31.5 | 15.5 | 24 | 32 |
| Comparative Ex ample 3 | 29.5 | 17.8 | 38 | 34 |
| Comparative Ex ample 4 | 31.1 | 18.4 | 49 | 32 |

From the data of Table 2, it can be confirmed that the super absorbent polymer passing through the surface crosslinking step using the surface crosslinking solution of t he present disclosure exhibits excellent absorption properties. Particularly, it can be co nfirmed that in Examples, excellent vortex time is exhibited, and simultaneously, gel bed permeability is remarkably improved.

**Claims**

1.  A method for preparing super absorbent polymer comprising steps of:

    forming hydrogel polymer comprising crosslinked polymer obtained by crosslinki ng polymerization of acrylic acid-based monomers having at least partially neutralized a cid groups in the presence of an internal crosslinking agent;
    drying, grinding, and classifying the hydrogel polymer to form base resin powde r; and
    crosslinking the surface of the base resin powder in the presence of a surface cr osslinking solution comprising an epoxy-based surface crosslinking agent, a monohydri c alcohol-based solvent and a hydrophobic dispersant, and having surface tension of 36 mN/m to 50 mN/m.

2.  The method according to claim 1, wherein the monohydric alcohol-based solvent is one or more selected from the group consisting of methanol, ethanol, n-propanol, isop ropanol and butanol.

3.  The method according to claim 1, wherein the monohydric alcohol-based solvent is included in the content of 1 to 5 parts by weight, based on the total content of the surf ace crosslinking solution.

4.  The method according to claim 1, wherein the hydrophobic dispersant is one or more selected from the group consisting of sodium dodecyl sulfate, poly(dimethyldiallylammoniumchloride), water dispersed silica, calcium stea-rate, di($C_{12-20}$alkyl)dimethylammonium salt and polyethylene glycol.

5.  The method according to claim 1, wherein the hydrophobic dispersant is include d in the content of 0.0001 to 1 part by weight, based on the total content of the surface c rosslinking solution.

6.  The method according to claim 1, wherein the epoxy-based surface crosslinking agent is one or more selected from the group consisting of ethylene glycol diglycidyl eth er, diethylene glycol diglycidyl ether, glycerol triglycidyl ether, polyethylene glycol diglyci dyl ether and propylene glycol diglycidyl ether.

7.  The method according to claim 1, wherein the epoxy-based crosslinking agent is included in the content of 0.01 to 10 parts by weight, based on the total content of the b ase resin powder.

8.  The method according to claim 1, wherein the surface crosslinking solution furth er comprises one or more additional additives selected from the group consisting of met hylene glycol, ethylene glycol, propylene glycol, and butylene glycol.

9.  The method according to claim 8, wherein the additional additives are included i n the content of 0.1 to 5 parts by weight, based on the total content of the surface crossl inking solution.

10. The method according to claim 1, wherein the surface crosslinking solution is inc luded in the content of 1 to 10 parts by weight, based on 100 parts by weight of the bas e resin powder.

11. The method according to claim 1, wherein the super absorbent polymer has gel bed permeability (GBP) of 50 darcy or more.

## INTERNATIONAL SEARCH REPORT

International application No.

**PCT/KR2023/017795**

### A. CLASSIFICATION OF SUBJECT MATTER

**C08J 3/24**(2006.01)i; **C08J 3/12**(2006.01)i; **C08J 3/075**(2006.01)i; **C08F 220/04**(2006.01)i; **C08K 5/00**(2006.01)i; **C08K 5/053**(2006.01)i; **C08K 5/1515**(2006.01)i; **A61L 15/60**(2006.01)i

According to International Patent Classification (IPC) or to both national classification and IPC

### B. FIELDS SEARCHED

Minimum documentation searched (classification system followed by classification symbols)

C08J 3/24(2006.01); A61F 13/15(2006.01); A61F 5/44(2006.01); C08F 20/06(2006.01); C08F 8/14(2006.01); C08K 3/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에폭시계 표면 가교제(epoxy based surface crosslinker), 1가 알코올계 용매 (monohydric alcohol based solvent), 소수성 분산제(hydrophobic dispersant), 표면 장력(surface tension), 표면 가교 용액 (surface crosslinking solution), 고흡수성 수지(super absorbent polymer)

### C. DOCUMENTS CONSIDERED TO BE RELEVANT

| Category* | Citation of document, with indication, where appropriate, of the relevant passages | Relevant to claim No. |
|---|---|---|
| Y | KR 10-2017-0009546 A (LG CHEM, LTD.) 25 January 2017 (2017-01-25)<br>See claims 6-16; and paragraphs [0053]-[0086]. | 1-11 |
| Y | US 5597873 A (CHAMBERS, D. R. et al.) 28 January 1997 (1997-01-28)<br>See claim 1. | 1-11 |
| A | KR 10-2022-0088354 A (LG CHEM, LTD.) 27 June 2022 (2022-06-27)<br>See entire document. | 1-11 |
| A | KR 10-2017-0112877 A (LG CHEM, LTD.) 12 October 2017 (2017-10-12)<br>See entire document. | 1-11 |
| A | JP 2004-121400 A (SAN-DIA POLYMER LTD.) 22 April 2004 (2004-04-22)<br>See entire document. | 1-11 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 February 2024** | **07 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/017795**

| Patent document cited in search report | | | Publication date (day/month/year) | Patent family member(s) | | | Publication date (day/month/year) |
|---|---|---|---|---|---|---|---|
| KR | 10-2017-0009546 | A | 25 January 2017 | CN | 106795319 | A | 31 May 2017 |
| | | | | CN | 106795319 | B | 18 September 2018 |
| | | | | DE | 202016008645 | U1 | 22 October 2018 |
| | | | | EP | 3165564 | A1 | 10 May 2017 |
| | | | | EP | 3165564 | B1 | 20 November 2019 |
| | | | | US | 2017-0216815 | A1 | 03 August 2017 |
| | | | | WO | 2017-014400 | A1 | 26 January 2017 |
| US | 5597873 | A | 28 January 1997 | CA | 2187633 | A1 | 19 October 1995 |
| | | | | CN | 1148395 | A | 23 April 1997 |
| | | | | CN | 1150218 | C | 19 May 2004 |
| | | | | EP | 0755413 | A1 | 29 January 1997 |
| | | | | JP | 10-500712 | A | 20 January 1998 |
| | | | | WO | 95-27739 | A1 | 19 October 1995 |
| KR | 10-2022-0088354 | A | 27 June 2022 | CN | 115989268 | A | 18 April 2023 |
| | | | | EP | 4186945 | A1 | 31 May 2023 |
| | | | | JP | 2023-540289 | A | 22 September 2023 |
| | | | | WO | 2022-131837 | A1 | 23 June 2022 |
| KR | 10-2017-0112877 | A | 12 October 2017 | CN | 107614575 | A | 19 January 2018 |
| | | | | CN | 107614575 | B | 12 January 2021 |
| | | | | EP | 3279241 | A1 | 07 February 2018 |
| | | | | EP | 3279241 | B1 | 01 September 2021 |
| | | | | EP | 3882301 | A1 | 22 September 2021 |
| | | | | EP | 3882301 | B1 | 30 August 2023 |
| | | | | US | 10632451 | B2 | 28 April 2020 |
| | | | | US | 11071968 | B2 | 27 July 2021 |
| | | | | US | 2018-0147557 | A1 | 31 May 2018 |
| | | | | US | 2020-0197909 | A1 | 25 June 2020 |
| | | | | WO | 2017-164462 | A1 | 28 September 2017 |
| JP | 2004-121400 | A | 22 April 2004 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220154686
- KR 1020230152074
- KR 1020147018005

**Non-patent literature cited in the description**

- **REINHOLD SCHWALM**. UV Coatings: Basics, Recent Developments and New Application. Elsevier, 2007, 115
- **ODIAN**. Principle of Polymerization. Wiley, 1981, 203